# EUROPEAN PATENT APPLICATION

(11) **EP 4 215 086 A1**
(43) Date of publication of application: **26.07.2023**
(21) Application number: 21888223.1
(22) Date of filing: 03.08.2021
(51) Int. Cl.: A47C 7/46, A47C 7/14, A47C 7/62, A61H 9/00, G01L 5/00, A47C 31/12

(54) **BACK FOLLOWING SUPPORT DEVICE, LONG-TIME SITTING PREVENTION CONTROL METHOD AND OFFICE CHAIR**

(30) Priority: 03.11.2020 CN 202011211053; 03.11.2020 CN 202022513256 U; 03.11.2020 CN 202011211055; 03.11.2020 CN 202011211042; 03.11.2020 CN 202022513193 U
(71) Applicant: Shanghai Backrobo Wellness Co., Ltd., Shanghai 201101 (CN)
(72) Inventor: LIU, Wenchao, Shanghai 201101 (CN); SONG, Yuxi, Shanghai 201101 (CN); DU, Jichang, Shanghai 201101 (CN); LI, Yongbing, Shanghai 201101 (CN)
(74) Representative: Canzler & Bergmeier Patentanwälte Partnerschaft mbB
(86) International application number: PCT/CN2021/110334
(87) International publication number: WO 2022/095524

(57) **Abstract**

A back following support device, a long-time sitting prevention control method and an office chair. The back following support device comprises: a backrest plate (11); a flexible back and waist support comprising a cushion air bag (12) arranged on the backrest plate (11); and a regulation and control system (3), wherein the regulation and control system (3) comprises a controller (31), an air feeder (35) for inflating the cushion air bag (12), a pressure regulating valve assembly (332) for controlling the amount of air in the cushion air bag (12) and an air pressure sensor (321) for acquiring an air pressure in the cushion air bag (12), and the air feeder (35), the pressure regulating valve assembly (332) and the air pressure sensor (321) are all connected to the controller (31). According to the solution, the comfort level of a seat and the back following support device can be adjusted, the waist and back of a user can be effectively supported, and requirements of different groups of people are met.

## Description

### Technical Field

The present disclosure relates to the field of daily necessities, and in particular, to a back-following support device, a control method for preventing sedentariness and a chair.

### Background

Nowadays, more and more people work indoors, and sedentariness is becoming more and more common. Due to the pressure from high-intensity work, it is easy for humans to ignore the damage to lumbar vertebra caused by sedentariness. At present, there are some technologies for preventing sedentariness. For example, when a user has been sitting on a chair for a preset duration, a device will make the user's body feel uncomfortable, thereby prompting the user to leave his seat and avoid sitting for too long. But such a method cannot fundamentally solve the problem of sedentariness and affects work efficiency. Or, when a user has been sitting on a chair for a preset duration, the user is simply informed of his or her sedentariness by a sound. Such a method has little or no effect in preventing sedentariness.

### Summary

In view of the above-mentioned shortcomings of the prior art, the present disclosure provides a back-following support device, a control method for preventing sedentariness and a chair. The present disclosure can adjust the seat and the back-following support device to effectively support the user's waist and/or back, meet requirements of different people, and detect whether a user has been sitting for a long time. If the user has been sitting for a long time, the present disclosure can massage the user's buttocks and/or back by inflation and deflation, to change the sitting posture of the user.

The present disclosure provides a control method for preventing sedentariness, including:
S1, determining whether a user is sitting on a chair, if yes, a sitting duration for which the user sits on the chair is recorded, if not, the sitting duration is reset to zero;
S2, determining whether the sitting duration reaches a preset warning duration, if yes, step S2 is followed by step S3, if not, the control method returns to step S1; and
S3, repeatedly inflating and deflating a body position intervention airbag disposed at the user's buttocks and/or back, so that the body position intervention airbag repeatedly pushes the user's buttocks and/or back.

In an embodiment of the present disclosure, the step S3 includes the following steps:
S31, inflating the body position intervention airbag, and recording an inflation duration for which the body position intervention airbag is being inflated;
S32, determining in real time whether the inflation duration reaches a first preset duration, if yes, step S32 is followed by step S33, if not, the control method returns to step S31;
S33, deflating the body position intervention airbag, and recording a deflation duration for which the body position intervention airbag is being deflated;
S34, determining in real time whether the deflation duration reaches a second preset duration, if yes, step S34 is followed by step S35, if not, the control method returns to step S33;
S35, recording a number of inflation-deflation cycles the body position intervention airbag undergoes; and
S36, determining whether the number of inflation-deflation cycles reaches a preset number, if yes, the inflation and deflation of the body position intervention airbag is stopped, if not, the control method returns to step S31.

The present disclosure also provides a sedentariness prevention device for realizing a control method for preventing sedentariness, including:
a backrest, including a backrest plate;
a seat, including a seat plate;
a body position intervention airbag, disposed over the seat plate and/or the backrest plate; and
a control system, including a controller, an air pressure sensor, and an inflation and deflation device; the controller includes a sitting monitoring module, a sitting timing module, a sedentariness determination module, and a sitting-posture adjustment module which are connected in sequence; the air pressure sensor is used to measure air pressure inside the body position intervention airbag in real time and is communicatively connected to the sitting monitoring module; the inflation and deflation device is communicated with the body position intervention airbag and is communicatively connected to the sitting-posture adjustment module.

In an embodiment of the present disclosure, the body position intervention airbag includes a seat airbag disposed over the seat plate and/or a cushion airbag disposed over the backrest plate.

In an embodiment of the present disclosure, the control system further includes a pressure-measuring air passage which is communicated with the body position intervention airbag, and the air pressure sensor is disposed over the pressure-measuring air passage.

In an embodiment of the present disclosure, the inflation and deflation device includes an air supply device for inflating the body position intervention airbag, and a pressure-regulating valve for controlling the amount of air inside the body position intervention airbag; the air supply device and the pressure-regulating valve are all connected to the sitting-posture adjustment module.

In an embodiment of the present disclosure, the control system further includes a power supply connected to the controller.

In an embodiment of the present disclosure, the control system further includes a hand controller connected to the controller.

As mentioned above, the control method for preventing sedentariness and the sedentariness prevention device of the present disclosure have the following beneficial effects:

In the control method for preventing sedentariness of the present disclosure, the body position intervention airbag is used as an interference factor of the user's sedentariness. When it is determined that the user has sedentary behavior, the body position intervention airbag disposed at the user's buttocks and/or back is repeatedly inflated and deflated to repeatedly push the user's buttocks and/or back. Even if the user does not actively change the sitting posture, the sitting posture of the user is changed under the action of the body position intervention airbag, and at the same time the user's buttocks and/or back is comfortably massaged, thereby reducing the pressure on lumbar vertebra and alleviating the damage to lumbar vertebra.

In the sedentariness prevention device of the present disclosure, when the user sits on the sedentariness prevention device, the sitting monitoring module acquires air pressure measured by the air pressure sensor in real time. If air pressure inside the body position intervention airbag stays within a preset air pressure range for a preset time period, it means that the user has not changed his sitting posture during the preset time period; otherwise, it means that the user has left the seat of the sedentariness prevention device or has changed his sitting posture during the preset time period. When the user has not changed his sitting posture during the preset time period, the sitting timing module records the sitting duration for which the user sits on the sedentariness prevention device; when the user leaves the seat of the sedentariness prevention device or changes the sitting posture, the sitting timing module resets the duration time to zero. The sedentariness determination module compares the sitting duration with the preset warning duration in real time; when the sitting duration reaches the preset warning duration, the sedentariness determination module sends a reminder command to the sitting-posture adjustment module, and the sitting-posture adjustment module sends an inflating and deflating command to the inflation and deflation device for inflating and deflating. Therefore, the sedentariness prevention device can detect whether the user is sitting on the sedentariness prevention device for a long time, and if the user is sitting on the sedentariness prevention device for a long time, the inflation and deflation device is inflated and deflated to massage the user's buttocks and/or back, by changing the sitting posture of the user.

The present disclosure also provides a sedentariness prevention device for realizing a control method for preventing sedentariness, including:
a backrest, including a backrest plate, and a cushion airbag disposed over the backrest plate;
a seat, including a seat plate, and a seat airbag disposed over the seat plate; and
a control system, including a controller, a pressure sensor, and an inflation and deflation device; the controller includes a real-time acquisition module, a pressure judgment module, and a sitting-posture adjustment module which are connected in sequence; the pressure sensor is disposed over the seat and/or the backrest and is communicatively connected to the real-time acquisition module, the inflation and deflation device is communicated with the cushion airbag and the seat airbag respectively, and is communicatively connected to the sitting-posture adjustment module.

In an embodiment of the present disclosure, the backrest further includes a first soft cushion cover; the first soft cushion cover covers a side of the cushion airbag facing away from the backrest plate.

In an embodiment of the present disclosure, the seat further includes a second soft cushion cover; the second soft cushion cover covers a side of the seat airbag facing away from the seat plate.

In an embodiment of the present disclosure, the seat further includes a pressure-measuring air passage which is communicated with the seat airbag, the pressure sensor includes an air pressure sensor, and the air pressure sensor is disposed over the pressure-measuring air passage.

In an embodiment of the present disclosure, the pressure sensor includes a sitting pressure sensor, and the sitting pressure sensor is disposed over the seat plate.

In an embodiment of the present disclosure, the inflation and deflation device includes an air supply device for inflating the cushion airbag and the seat airbag respectively, a first pressure-regulating valve for controlling the amount of air inside the cushion airbag, and a second pressure-regulating valve for controlling the amount of air inside the seat airbag; the air supply device, the first pressure-regulating valve, and the second pressure-regulating valve are all connected to the sitting-posture adjustment module.

In an embodiment of the present disclosure, the control system further includes a power supply connected to the controller.

In an embodiment of the present disclosure, the cushion airbag includes a waist airbag and a back airbag communicated with each other.

In an embodiment of the present disclosure, the seat airbag includes a front side airbag and a rear side airbag.

The present disclosure also provides a chair, including a sedentariness prevention device.

As described above, the sedentariness prevention device and the chair of the present disclosure have the following beneficial effects: when the user sits on the sedentariness prevention device, the pressure sensor disposed over the seat and/or the backrest measures a pressure asserted by the user on the seat and/or the backrest, and the real-time acquisition module acquires the value of the pressure (hereinafter, pressure value), the pressure judgment module determines whether the pressure value is greater than a preset value, if yes, the sitting-posture adjustment module sends an inflation command to the inflation and deflation device, so that the inflation and deflation device inflates the cushion airbag and the seat airbag. When the amount of air inside the cushion airbag and the seat airbag reaches a preset amount, the inflation and deflation device stops inflating, in order to keep the cushion airbag and the seat airbag at the preset air pressure, thereby making the cushion airbag and the seat airbag more comfortable. It is worth noting that, when the user sits on the sedentariness prevention device, the value of the pressure the user asserts on the seat and/or the backrest is used as a reference value. Thereafter, the pressure sensor continuously measures the pressure value on the seat and/or backrest, the real-time acquisition module continuously obtains a real-time pressure value, and the pressure judgment module continuously determines pressure differences between the real-time pressure value and the reference value; if the pressure differences are relatively stable within a preset time period (for example, the pressure differences are within a preset value range in the preset time period), it means that the user has sedentary behavior; if the pressure differences fluctuate greatly within the preset time period (for example, some pressure differences are not within the preset value range), it means that the user does not have sedentary behavior. When the pressure judgment module determines that the user has sedentary behavior, the sitting-posture adjustment module controls the inflation and deflation device to repeatedly inflate and deflate the seat airbag and/or the cushion airbag, to change the sitting posture of the user, and reduce the pressure on the lumbar vertebra. In addition, by repeatedly inflating and deflating the seat airbag and/or the cushion airbag, the buttocks and/or the back can be massaged and relaxed without affecting the normal work of the user. Therefore, the sedentariness prevention device of the present disclosure can adjust the user's sitting posture and massage the buttocks and/or back without affecting the normal work of the user, to avoid sedentariness of the user and reduce the pressure on the lumbar vertebra. In an embodiment, the sedentariness prevention device further includes a reminder device, and the reminder device can emit sound or vibrate.

The present disclosure also provides a back-following support device, including:
a backrest plate;
a flexible back and waist support, including a cushion airbag disposed over the backrest plate; and
a control system, including a controller, an air supply device for inflating the cushion airbag, a pressure-regulating valve for controlling the amount of air in the cushion airbag, and an air pressure sensor for detecting air pressure inside the cushion airbag; the air supply device, the pressure-regulating valve, and the air pressure sensor are all connected to the controller.

In an embodiment of the present disclosure, the back-following support device further includes a first soft cushion cover; the first soft cushion cover covers a side of the cushion airbag facing away from the backrest plate.

In an embodiment of the present disclosure, the flexible back and waist support further includes an air supply and exhaust passage and a pressure-measuring air passage which are communicated with the cushion airbag; wherein the air supply device is connected to the air supply and exhaust passage, the pressure-regulating valve is disposed over the air supply and exhaust passage, and the air pressure sensor is connected to the pressure-measuring air passage.

In an embodiment of the present disclosure, the air supply and exhaust passage includes an inflation pipeline and an exhaust pipeline, and the inflation pipeline is communicated with the exhaust pipeline; wherein two ends of the inflation pipeline are respectively connected to the air supply device and the cushion airbag, and the pressure-regulating valve is disposed over the exhaust pipeline.

In an embodiment of the present disclosure, the control system further includes a hand controller 36 connected to the controller.

In an embodiment of the present disclosure, the cushion airbag includes a waist airbag and a back airbag communicated with each other.

In an embodiment of the present disclosure, the waist airbag includes two left air chambers that overlap each other, and two right air chambers that overlap each other, and the back airbag has one air chamber.

The present disclosure also provides a chair, including a seat and a back-following support device.

In an embodiment of the present disclosure, the seat includes a seat plate, and a sitting pressure sensor disposed over the seat plate; the sitting pressure sensor is connected to the controller.

In an embodiment of the present disclosure, the seat further includes a seat airbag that is conFigured to be inflated by the air supply device, and a second pressure-regulating valve that controls the amount of air inside the seat airbag; the second pressure-regulating valve is connected to the controller.

As described above, the back-following support device and the chair of the present disclosure has the following beneficial effects: when the user's waist and/or back leans on the cushion airbag, air pressure inside the cushion airbag is changed, and the air pressure sensor transmits air pressure data to the controller, and the controller processes the air pressure data to determine whether the back-following support device is being used. If the controller determines that the back-following support device is being used, the controller controls the air supply device and the pressure-regulating valve to inflate the cushion airbag until the cushion airbag can fully support the waist and/or back of the user. When air pressure inside the cushion airbag reaches a preset air pressure value, the controller controls the air supply device to stop inflating the cushion airbag, and controls the pressure-regulating valve to keep the cushion airbag at the preset air pressure value. When the user changes his or her sitting posture and the cushion airbag cannot fully support the user's waist and/or back, air pressure inside the cushion airbag decreases, and the controller controls the air supply device and the pressure-regulating valve to inflate the cushion airbag until the cushion airbag fully supports the user's waist and/or back at which time air pressure inside the cushion airbag reaches the preset air pressure value again. When the user changes his or her sitting posture and a support force of the cushion airbag on waist and/or back of the user is too large, air pressure inside the cushion airbag increases, and the controller controls the pressure-regulating valve to allow air in the cushion airbag to be exhausted to atmosphere until the supporting force of the cushion airbag on the user's waist and/or back is moderate again at which time air pressure inside the cushion airbag reaches the preset pressure value again. Therefore, under the action of the control system, the cushion airbag is inflated and deflated as the user's sitting posture changes, thereby changing the volume of the cushion airbag to make the user comfortable, making the back-following support device fit and effectively support the user waist and/or back, changing the support force of the cushion airbag on waist and/or back, greatly reducing the damage to lumbar vertebra caused by sedentariness, and realizing the function of back-following support.

The chair of the present disclosure can adjust the comfort degree of the seat and the back-following support device to effectively support the user's waist and/or back and meet requirements of different people.

The present disclosure also provides an external-pressure-sensing back-following support device, including:
a backrest, including a backrest plate and a flexible back and waist support; the flexible back and waist support includes a cushion airbag disposed over the backrest plate; and
a control system, including a controller, an air supply device for inflating the cushion airbag, a pressure-regulating valve for controlling the amount of air in the cushion airbag, and a pressure sensor for detecting a pressure of a waist and/or back of a human body on the cushion airbag; the pressure sensor is disposed over a first outer surface of the cushion airbag, and the first outer surface of the cushion airbag faces a waist and/or back of a human body, or the pressure sensor is disposed over a second outer surface of the cushion airbag, and the second outer surface of the cushion airbag faces away from a waist and/or back of a human body; the air supply device, the pressure-regulating valve, and the pressure sensor are all connected to the controller.

In an embodiment of the present disclosure, further including a first soft cushion cover; the first soft cushion cover covers a side of the cushion airbag facing away from the backrest plate, and the pressure sensor is sandwiched between the cushion airbag and the first soft cushion cover.

In an embodiment of the present disclosure, the first soft cushion cover is made of elastic cloth.

In an embodiment of the present disclosure, the cushion airbag includes a waist airbag and a back airbag which are communicated with each other; the number of the pressure sensors is more than one, and the pressure sensors includes a first group of pressure sensors and a second group of pressure sensors; the first group of pressure sensors is disposed on an outer side of the waist airbag facing a waist of a human body, and the second group of pressure sensors is disposed on an outer side of the back airbag facing a back of a human body.

As described above, the external-pressure-sensitive back-following support device of the present disclosure has the following beneficial effects: in the present disclosure, the pressure sensor is disposed over the first outer surface of the cushion airbag, and the first outer surface of the cushion airbag faces a waist and/or back of the user, or the pressure sensor is disposed over the second outer surface of the cushion airbag, and the second outer surface of the cushion airbag faces away from a waist and/or back of the user. The pressure measured by the pressure sensor changes when a waist and/or back of the user leans against the cushion airbag; the pressure data measured by the pressure sensor is transmitted to the controller, and the controller processes the pressure data to determine whether the external-pressure-sensing back-following support device is used. If the external-pressure-sensing back-following support device is used, the controller controls the air supply device and the pressure-regulating valve to inflate the cushion airbag until the cushion airbag can fully support a waist and/or back of the user. When the pressure measured by the pressure sensor reaches the preset air pressure value, the controller controls the air supply device to stop inflating the cushion airbag, and controls the pressure-regulating valve to keep the cushion airbag at the preset air pressure value. When the user changes his or her sitting posture and the cushion airbag cannot fully support the user's waist and/or back, air pressure detected by the pressure sensor decreases, and the controller controls the air supply device and the pressure-regulating valve to inflate the cushion airbag until the cushion airbag fully supports the user's waist and/or backat which time air pressure detected by the pressure sensor reaches the preset air pressure value again. When the user changes his or her sitting posture and the support force of the cushion airbag on waist and/or back of the user is too large, air pressure detected by the pressure sensor increases, and the controller controls the pressure-regulating valve to allow air in the cushion airbag to be exhausted to atmosphere until the support force of the cushion airbag on the user's waist and/or back is moderate againat which time the pressure measured by the pressure sensor reaches the preset pressure value again. The traditional external-pressure-sensing back-following support device requires a pressure sensor to be arranged inside the cushion airbag 12 or in a flow channel communicated with the cushion airbag, however, in the external-pressure-sensing back-following support device of the present disclosure, the pressure sensor is disposed over the first outer surface of the cushion airbag and the first outer surface of the cushion airbag faces a waist and/or back of a human body, to facilitate the maintenance and replacement of the pressure sensor; meanwhile, there is no need to lay an additional pressure-measuring passage, thus improving the reliability of the pressure data obtained by the pressure sensor. Therefore, under the action of the control system, the cushion airbag is inflated and deflated as the user's sitting posture changes, thereby changing the volume of the cushion airbag to make the user more comfortable, making the flexible back and waist support fit and effectively support the user's waist and/or back, changing a support force of the cushion airbag on waist and/or back, greatly reducing the damage to the lumbar vertebra caused by sedentariness, realizing the function of manual back-following support, facilitating the maintenance and replacement of the pressure sensor, and improving the reliability of the pressure data obtained by the pressure sensor.

The present disclosure also provides a manual back-following support device, including:
a backrest, including a backrest plate and a flexible back and waist support, the flexible back and waist support includes a cushion airbag disposed over the backrest plate, and the cushion airbag includes an air nozzle that allows air to enter and exit the cushion airbag; and
a manual inflation and deflation device, including an expandable air storage cavity; the expandable air storage cavity is provided with a suction check valve that allows air to flow into the expandable air storage cavity and an exhalation check valve that allows air to flow out from the expandable air storage cavity; the exhalation check valve is connected to the air nozzle through a ventilation pipeline, and the exhalation check valve is provided with an exhaust check valve that allows air in the ventilation pipeline to be exhausted to atmosphere.

In an embodiment of the present disclosure, the manual back-following support device further includes a first soft cushion cover; the first soft cushion cover covers a side of the cushion airbag facing away from the backrest plate, a leaning buffer layer is sandwiched between the first soft cushion cover and the cushioning airbag.

In an embodiment of the present disclosure, the first soft cushion cover is made of elastic cloth.

In an embodiment of the present disclosure, the leaning buffer layer is made of sponge.

As mentioned above, the manual back-following support device and the chair of the present disclosure have the following beneficial effects: in the manual inflation and deflation device, the exhaust check valve is a normally-closed valve, and the exhaust check valve is opened by pressing the exhaust check valve. An inner cavity of the expandable air storage cavity can be expanded or contracted. With the suction check valve closed, the exhaust check valve closed, and the exhalation check valve opened, when the user presses the expandable air storage cavity, the inner cavity of the expandable air storage cavity is gradually reduced and air in the expandable air storage cavity is transmitted to the cushion airbag through the above-mentioned ventilation pipeline, so that the cushion airbag is inflated tomake the user more comfortable and support for the user's waist or back. With the suction check valve opened, the exhaust check valve closed, and the exhalation check valve closed, when the user releases the expandable air storage cavity, air flows into the inner cavity of the expandable air storage cavity and the expandable air storage cavity expands to its initial state under the action of an elastic recovery force. When it is necessary to reduce the size of the cushion airbag along a direction perpendicular to the backrest plate due to a change in the user's sitting posture, the exhaust check valve is opened and air in the cushion airbag is discharged to the atmosphere through the ventilation pipeline and the exhaust check valve in turn. When it is necessary to increase the size of the cushion airbag along a direction perpendicular to the backrest plate due to a change in the user's sitting posture, the expandable air storage cavity is pressed to inflate the cushion airbag, so that the volume of the cushioned airbag meets the support requirements for the user. In addition, the expandable air storage cavity is provided with a suction check valve and an exhalation check valve, and the exhalation check valve is provided with the exhaust check valve, so that the overall size of the manual inflation and deflation device is small and it is convenient for the user to control the inflation and deflation of the cushion airbag with one hand. Therefore, the manual back-following support device of the present disclosure enables the user to manually inflate and deflate the cushion airbag by changing 'his or her sitting posture without using electrical power, thereby changing the volume of the cushioned airbag to improve comfort degree for the user and making the flexible back and waist support fit and effectively support the user's waist and/or back. The above inflating and deflating method can change a support force of the cushion airbag on waist and/or back, greatly reduces the damage to the lumbar vertebra caused by sedentariness, realizes the function of manual back-following support, and facilitates the user to control the cushion airbag with one hand, so as to realize the function of manual inflation and deflation.

### Brief Description of the Drawings

Fig. 1a is a schematic flowchart of a control method for preventing sedentariness according to an embodiment of the present disclosure.
Fig. 1b is a schematic flowchart of an inflation and deflation process of a body position intervention airbag according to an embodiment of the present disclosure.
Fig. 1c is a schematic structural diagram of a sedentariness prevention device according to an embodiment of the present disclosure.
Fig. 1d is a block diagram of a first embodiment of a sedentariness prevention device according to the present disclosure;
Fig. 1e is a block diagram of a second embodiment of a sedentariness prevention device according to the present disclosure;
Fig. 1f is a schematic structural diagram of a first embodiment of a controller according to the present disclosure;
Fig. 2a is a schematic diagram of a third embodiment of a sedentariness prevention device according to the present disclosure;
Fig. 2b is a schematic diagram of a fourth embodiment of a sedentariness prevention device according to the present disclosure;
Fig. 2c is a schematic structural diagram of a second embodiment of a controller according to the present disclosure;
Fig. 2d is an exploded view of a backrest according to an embodiment of the present disclosure;
Fig. 2e is an exploded view of a seat according to an embodiment of the present disclosure;
Fig. 2f is a first perspective view of a chair according to an embodiment of the present disclosure;
Fig. 2g is a schematic diagram of a seat and a control system of a chair according to an embodiment of the present disclosure;
Fig. 3a is a schematic diagram of a back-following support device according to an embodiment of the present disclosure;
Fig.3b is an exploded view of a first embodiment of a back-following support device according to the present disclosure;
Fig. 3c is an exploded view of a second embodiment of a back-following support device according to the present disclosure;
Fig. 3d is a perspective view of a controller and a pressure sensor according to an embodiment of the present disclosure;
Fig. 3e is a schematic diagram of a first embodiment of a chair according to the present disclosure;
Fig. 3f is a second perspective view of a chair according to an embodiment of the present disclosure;
Fig. 3g is a perspective view of a backrest plate, a cushion airbag and a soft first cushion cover of a chair according to an embodiment of the present disclosure;
Fig. 3h is a perspective view of a seat plate, a seat airbag and a second soft cushion cover of a chair according to an embodiment of the present disclosure;
Fig. 3i is a perspective view of a seat plate and a control system of a chair according to an embodiment of the present disclosure;
Fig. 3j is a schematic diagram of a chair according to a second embodiment of the present disclosure;
Fig. 4a is an exploded view of an external-pressure-sensing back-following support device according to an embodiment of the present disclosure;
Fig. 4b is a schematic diagram of an external-pressure-sensing back-following support device according to an embodiment of the present disclosure;
Fig. 5a is a schematic diagram of a manual back-following support device according to an embodiment of the present disclosure;
Fig. 5b is a schematic diagram of a manual inflation and deflation device according to an embodiment of the present disclosure;

### Reference Numerals

- 1: Backrest
- 11: Backrest plate
- 12: Cushion airbag
- 121: Waist airbag
- 121a: Left air chamber
- 121b: Right air chambers
- 122: Back airbag
- 123: Air nozzle
- 13: First soft cushion cover
- 14: Leaning buffer layer
- 2: Seat
- 21: Seat plate
- 22: Seat airbag
- 221: Front side airbag
- 222: Rear side airbag
- 23: Second soft cushion cover
- 3: Control system
- 31: Controller
- 311: Sitting monitoring module
- 312: Sitting timing module
- 313: Sedentariness determination module
- 314: Sitting-posture adjustment module
- 315: Real-time acquisition module
- 316: Pressure judgment module
- 32: Pressure sensor
- 321: Air pressure sensor
- 322: Sitting pressure sensor
- 323: Pressure sensor
- 33: Inflation and deflation device
- 331: Air supply device
- 332: Pressure-regulating valve
- 332a: First pressure-regulating valve
- 332b: Second pressure-regulating valve
- 34: Pressure-measuring air passage
- 35: Power supply
- 36: Hand controller
- 37: Air supply and exhaust passage
- 371: Inflation pipeline
- 372: Exhaust pipeline
- 4: Manual inflation and deflation device
- 41: Expandable air storage cavity
- 42: Suction check valve
- 43: Exhalation check valve
- 44: Ventilation pipeline
- 45: Exhaust check valve

### Detailed Description

The embodiments of the present disclosure are described below by specific embodiments, and those skilled in the art can easily understand other advantages and effects of the present disclosure from the contents disclosed in this specification.

It should be noted that the structures, proportions, sizes, etc. shown in the accompanying drawings in this specification are only used to cooperate with the contents disclosed in the specification for the understanding and reading of those who are familiar with the technology, and are not intended to limit the implementation of the present disclosure. Any structural modification, proportional relationship change or size adjustment, without affecting the effect that the present disclosure can produce and the purpose that can be achieved, should still fall within the present disclosure. At the same time, the terms such as "up", "down", "left", "right", "middle" and "one" quoted in this specification are only for the convenience of description and clarity, and are not used to limit this specification. Any change or adjustment of the relative relationship thereof without substantially changing the technical content of the present disclosure shall also be regarded as within the implementable scope of the present disclosure.

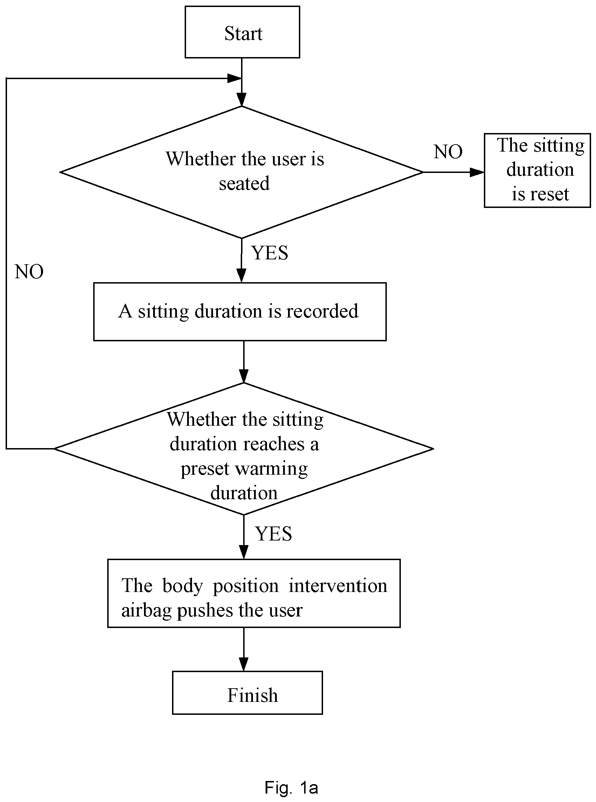

First, as shown in Fig. 1a, the present disclosure provides a control method for preventing sedentariness, including:
S1, determining whether a user is sitting on a chair, if yes, a sitting duration for which the user sits on the chair is recorded, if not, the sitting duration is reset to zero;
S2, determining whether the sitting duration reaches a preset warning duration, if yes, step S2 is followed by step S3, if not, the control method returns to step S1; and
S3, repeatedly inflating and deflating a body position intervention airbag disposed at the user's buttocks and/or back, so that the body position intervention airbag repeatedly pushes the user's buttocks and/or back.

In the control method for preventing sedentariness of the present disclosure, the body position intervention airbag is used as an interference factor of the user's sedentariness. When it is determined that the user has sedentary behavior, the body position intervention airbag disposed at the user's buttocks and/or back is repeatedly inflated and deflated to repeatedly push the user's buttocks and/or back. Even if the user does not actively change his or her sitting posture, the sitting posture is changed under the action of the body position intervention airbag, and at the same time the user's buttocks and/or back are massaged comfortably, thereby reducing the pressure on lumbar vertebra and alleviating the damage to lumbar vertebra.

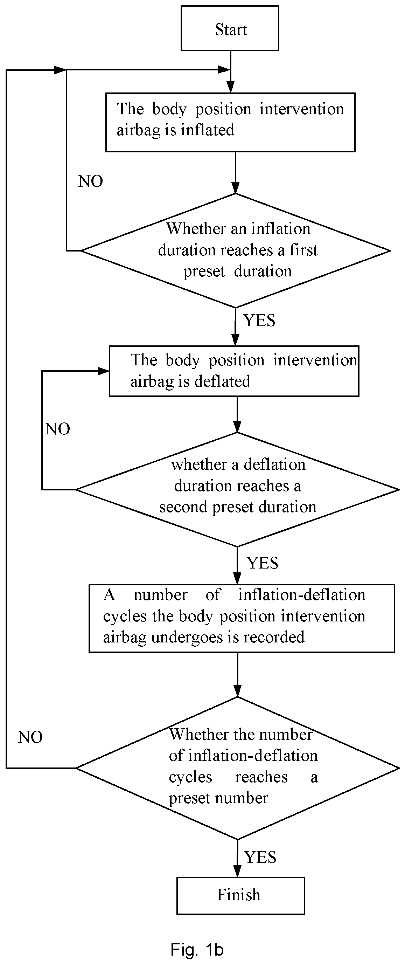

As shown in Fig. 1b, in order to precisely control the inflating and deflating of the body position intervention airbag, step S3 further includes the following steps:
S31, inflating the body position intervention airbag, and recording an inflation duration for which the body position intervention airbag is being inflated;
S32, determining in real time whether the inflation duration reaches a first preset duration, if yes, step S32 is followed by step S33, if not, the control method returns to step S31;
S33, deflating the body position intervention airbag, and recording a deflation duration for which the body position intervention airbag is being deflated;
S34, determining in real time whether the deflation duration reaches a second preset duration, if yes, step S34 is followed by step S35, if not, the control method returns to step S33;
S35, recording a number of inflation-deflation cycles the body position intervention airbag undergoes; and
S36, determining whether the number of inflation-deflation cycles reaches a preset number, if yes, the inflation and deflation of the body position intervention airbag is stopped, if not, the control method returns to step S31.

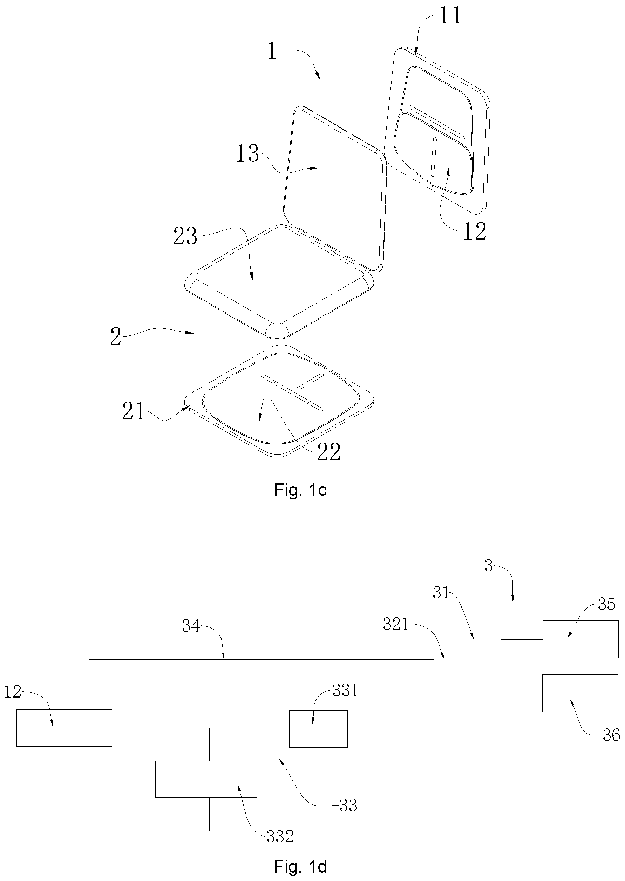

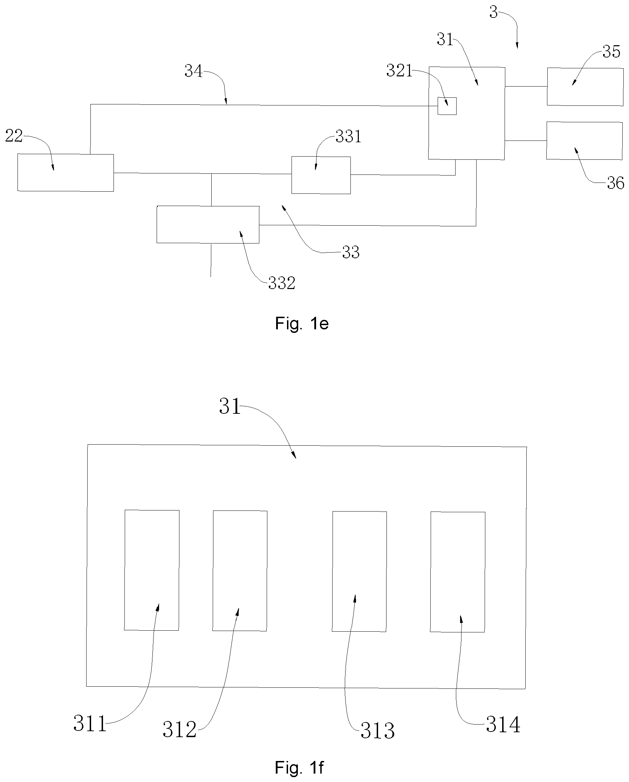

As shown in Fig. 1c, Fig. 1d, Fig. 1e and Fig. 1f, the present disclosure also provides a sedentariness prevention device for realizing the above-mentioned control method for preventing sedentariness, including:
A backrest 1, including a backrest board 11;
A seat 2, including a seat plate 21;
A body position intervention airbag, disposed over the seat plate (21) and/or the backrest plate (11); and
A control system 3, including a controller 31, an air pressure sensor 321 and an inflation and deflation device 33. The controller 31 includes a sitting monitoring module 311, a sitting timing module 312, a sedentariness determination module 313, and a sitting-posture adjustment module 314 which are connected in sequence. The air pressure sensor 321 is used to measure air pressure inside the body position intervention airbag in real time and is communicatively connected to the sitting monitoring module 311. The inflation and deflation device 33 is communicated with the body position intervention airbag (i.e., air can flow from one to another through a channel therebetween) and is communicatively connected to the sitting-posture adjustment module 314 (e.g., wireless or wired communication).

In the sedentariness prevention device of the present disclosure, when the user sits on the sedentariness prevention device, the sitting monitoring module 311 acquires air pressure measured by the air pressure sensor 321 in real time. If air pressure inside the body position intervention airbag stays within a preset air pressure range for a preset time period, it means that the user has not changed his sitting posture during the preset time period; otherwise, it means that the user has left the seat of the sedentariness prevention device or has changed his sitting posture during the preset time period. When the user has not changed his sitting posture during the preset time period, the sitting timing module 312 records the sitting duration for which the user sits on the sedentariness prevention device; when the user leaves the seat of the sedentariness prevention device or changes the sitting posture, the sitting timing module 312 resets the duration time to zero. The sedentariness determination module 313 compares the sitting duration with the preset warning duration in real time; when the sitting duration reaches the preset warning duration, the sedentariness determination module 313 sends a reminder command to the sitting-posture adjustment module 314, and the sitting-posture adjustment module 314 sends an inflating and deflating command to the inflation and deflation device for inflating and deflating. Therefore, the sedentariness prevention device can detect whether the user has been sitting on the sedentariness prevention device for a long time, and if the user has been sitting on the sedentariness prevention device for a long time, the inflation and deflation device is inflated and deflated to massage the user's buttocks and/or back, thereby changing the sitting posture of the user.

The above-mentioned body position intervention airbag includes a seat airbag 22 disposed over the seat plate 21 and/or a cushion airbag 12 disposed over the back plate 11.

In order to measure air pressure inside the body position intervention airbag, the control system 3 further includes a pressure-measuring air passage 34 which is communicated with the body position intervention airbag, and the air pressure sensor 321 is disposed over the pressure-measuring air passage 34.

In order to simplify the structure of the above-mentioned inflation and deflation device 33, the above-mentioned inflation and deflation device 33 includes an air supply device 331 (e.g., an air pump) for inflating the body position intervention airbag, and a pressure-regulating valve 332 for controlling the amount of air inside the body position intervention airbag. The air supply device 331 and the pressure-regulating valve 332 are all connected to the sitting-posture adjustment module 314.

In order to supply power to the controller 31, the control system 3 further includes a power supply 35 (e.g., a battery) connected to the controller 31.

In order to facilitate the control of the above-mentioned sedentariness prevention device, the control system 3 further includes a hand controller 36 connected to the controller 31.

Therefore, the control method for preventing sedentariness and the sedentariness prevention device of the present disclosure can detect whether the user has been sitting on the sedentariness prevention device for a long time, and if the user has been sitting on the sedentariness prevention device for a long time, the inflation and deflation device is inflated and deflated to massage the user's buttocks and/or back, thereby changing the sitting posture of the user.

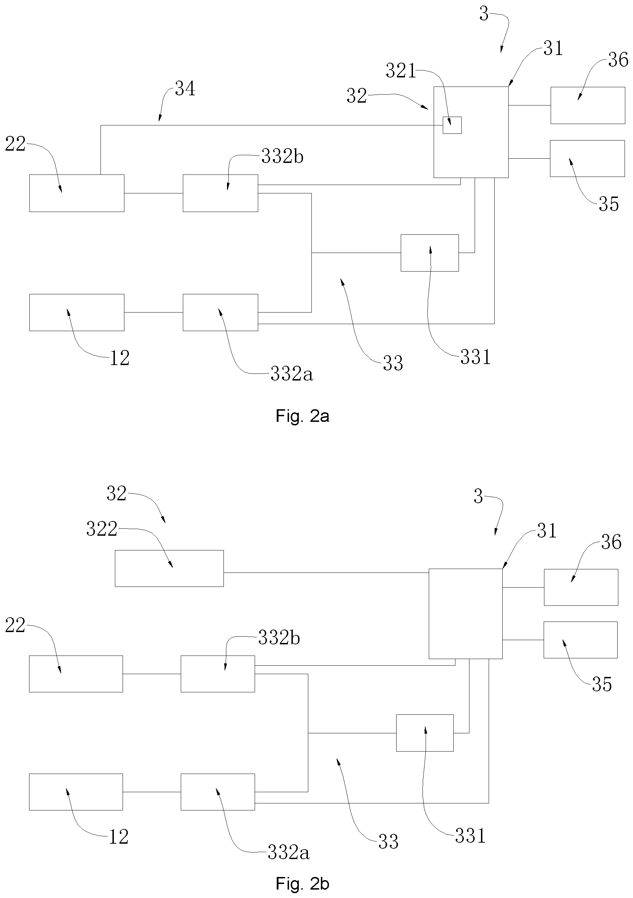

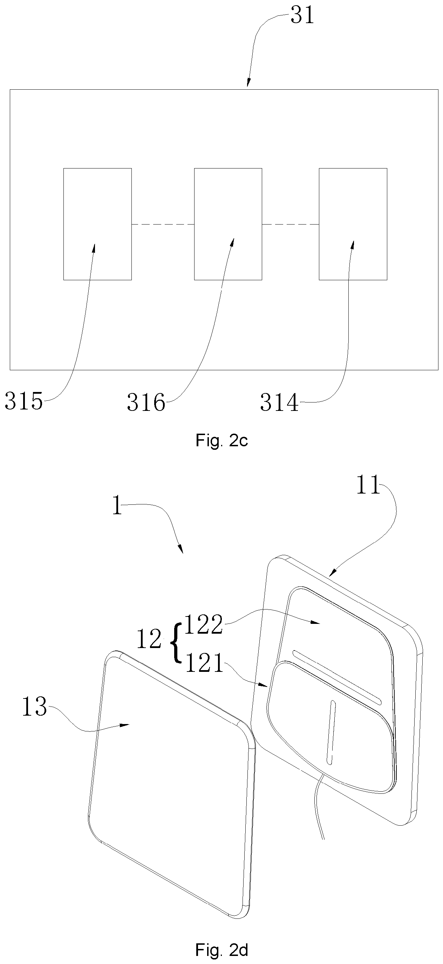

Next, as shown in Fig. 2a to Fig. 2e, the present disclosure also provides another sedentariness prevention device for realizing a control method for preventing sedentariness, including:

A backrest 1, including a backrest plate 11, and a cushion airbag 12 disposed over the backrest plate 11;

A seat 2, including a seat plate 21, and a seat airbag 22 disposed over the seat plate 21;

A control system 3, including a controller 31, a pressure sensor 32 and an inflation and deflation device 33; the controller 31 includes a real-time acquisition module 315, a pressure judgment module 316 and a sitting-posture adjustment module 314 which are connected in sequence; the pressure sensor 32 is disposed over the seat 2 and/or the backrest 1 and is communicatively connected to the real-time acquisition module 315, the inflation and deflation device 33 is communicated with the cushion airbag 12 and the seat airbag 22 respectively, and is communicatively connected to the sitting-posture adjustment module 314.

In the present disclosure, when the user sits on the sedentariness prevention device, the pressure sensor 32 disposed over the seat 2 and/or the backrest 1 measures a pressure asserted by the user on the seat 2 and/or the backrest 1, and the real-time acquisition module 315 acquires the pressure value, the pressure judgment module 316 determines whether the pressure value is greater than a preset value, if yes, the sitting-posture adjustment module 314 sends an inflation command to the inflation and deflation device 33, so that the inflation and deflation device 33 inflates the cushion airbag 12 and the seat airbag 22. When the amount of air inside the cushion airbag 12 and the seat airbag 22 reaches a preset amount, the inflation and deflation device 33 stops inflating, in order to keep the cushion airbag 12 and the seat airbag 22 at the preset air pressure, thereby making the cushion airbag 12 and the seat airbag 22 more comfortable. It is worth noting that, when the user sits on the sedentariness prevention device, the value of the pressure the user asserts on the seat 2 and/or the backrest 1 is used as a reference value. Thereafter, the pressure sensor 32 continuously measures the pressure value on the seat 2 and/or backrest 1, the real-time acquisition module 315 continuously obtains a real-time pressure value, and the pressure judgment module 316 continuously determines pressure differences between the real-time pressure value and the reference value; if the pressure differences are relatively stable within a preset time period (for example, the pressure differences are within a preset value range in the preset time period), it means that the user has sedentary behavior; if the pressure differences fluctuate greatly within the preset time period (for example, some pressure differences are not within the preset value range), it means that the user does not have sedentary behavior. When the pressure judgment module 316 determines that the user has sedentary behavior, the sitting-posture adjustment module 314 controls the inflation and deflation device 33 to repeatedly inflate and deflate the seat airbag 22 and/or the cushion airbag 12, to change the sitting posture of the user and reduce the pressure on lumbar vertebra. In addition, by repeatedly inflating and deflating the seat airbag 22 and/or the cushion airbag 12, the buttocks and/or the back can be massaged and relaxed without affecting the normal work of the user. Therefore, the sedentariness prevention device of the present disclosure can adjust the user's sitting posture and massage the buttocks and/or back without affecting the normal work of the user, to avoid sedentary behavior of the user and reduce the pressure on lumbar vertebra. In an embodiment, the sedentariness prevention device further includes a reminder device, and the reminder device can emit sound or vibrate.

As shown in Fig. 2d, in order to protect the cushion airbag 12 and allow the user to lean more comfortably, the backrest 1 further includes a first soft cushion cover 13; the first soft cushion cover covers a side of the cushion airbag 12 facing away from the backrest plate 11.

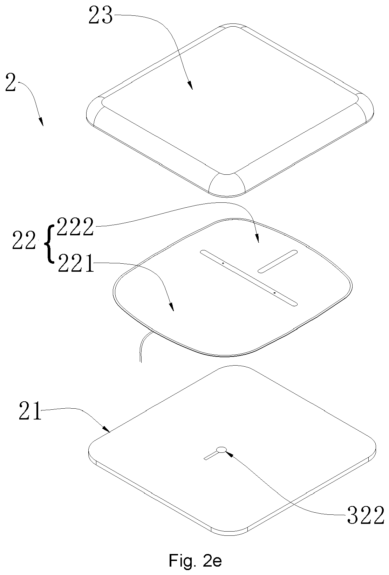

As shown in Fig. 2e, in order to protect the seat airbag 22 and allow the user to sit more comfortably, the seat 2 further includes a second soft cushion layer 23; the second soft cushion layer 23 covers a side of the seat airbag 22 facing away from the seat plate 21.

As shown in Fig. 2a, in the third embodiment of the above-mentioned sedentariness prevention device, in order for the pressure sensor 32 to measure air pressure inside the seat airbag 22, the seat 2 further includes a pressure-measuring air passage 34 which is communicated with the seat airbag 22, the pressure sensor 32 includes an air pressure sensor 321, and the air pressure sensor 321 is disposed over the pressure-measuring air passage 34.

As shown in Fig. 2b, in the fourth embodiment of the above-mentioned sedentariness prevention device: in order to detect the user's pressure on the seat 2, the pressure sensor 32 includes a sitting pressure sensor 322, and the sitting pressure sensor 322 is disposed over the seat plate 21. For example, the sitting pressure sensor 322 may be one of a thin film pressure sensor, a capacitive sensor, a strain gauge, and a mechanical switch.

The above-described regulating valve 332 (shown in Fig. 1d and Fig. 1e) includes a first pressure-regulating valve 332a and a second pressure regulating valve 332b (shown in Fig. 2a and Fig. 2b). The inflation and deflation device 33 includes an air supply device 331 (for example, an air pump) for inflating the cushion airbag 12 and the seat airbag 22 respectively, the first pressure regulating valve 332a for controlling the amount of air inside the cushion airbag 12, and the second pressure-regulating valve 332b for controlling the amount of air inside the seat airbag 22; the air supply 331, the first pressure-regulating valve 332a, and the second pressure-regulating valve 332b are all connected to the sitting-posture adjustment module 314.

In order to supply power to the controller 31, the control system 3 further includes a power supply 35 (e.g., a battery), and the power supply 35 is connected to the controller 31.

The above-mentioned cushion airbag 12 includes a waist airbag 121 and a back airbag 122 which are communicated with each other. When the user's waist and/or back is resting on the back airbag 122, the back airbag 122 is compressed, and since the waist airbag 121 and the back airbag 122 are communicated with each other, air inside the back airbag 122 flows into the waist airbag 121 to balance the air pressure inside the cushion airbag 12; as air inside the back airbag 122 flows into the waist airbag 121, the volume of the waist airbag 121 becomes larger and the volume of the back airbag 122 becomes smaller, thereby supporting the waist and/or back of the user. In an embodiment, the back airbag 122 includes a left back air chamber and a right back air chamber, to make the cushion airbag 12 fit the user better.

The seat airbag 22 includes a front side airbag 221 and a rear side airbag 222. When the user leans forward, the front side airbag 221 is squeezed, and since the rear side airbag 222 and the front side airbag 221 are communicated with each other, air inside the front side airbag 221 flows into the rear side airbag 222 to balance air pressure inside the seat airbag 22; as air inside the front side airbag 221 flows into the rear side airbag 222, the volume of the rear side airbag 222 become larger and the volume of the front side airbag 221 become smaller, thereby supporting buttocks of the user. Further, the rear side airbag 222 includes a left buttock air chamber and a right buttock air chamber, to make the seat airbag 22 fit the user better.

As shown in Figs. 2a and 2b, in order to facilitate the control of the above-mentioned sedentariness prevention device, the control system 3 further includes a hand controller 36 connected to the controller 31 .

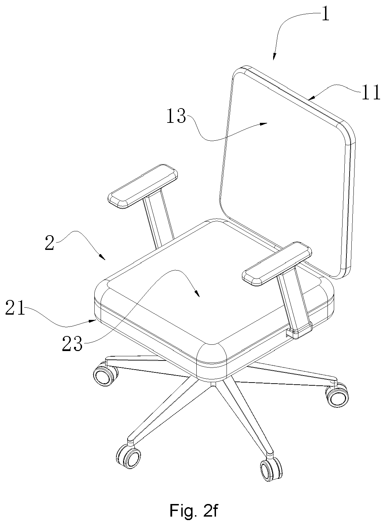

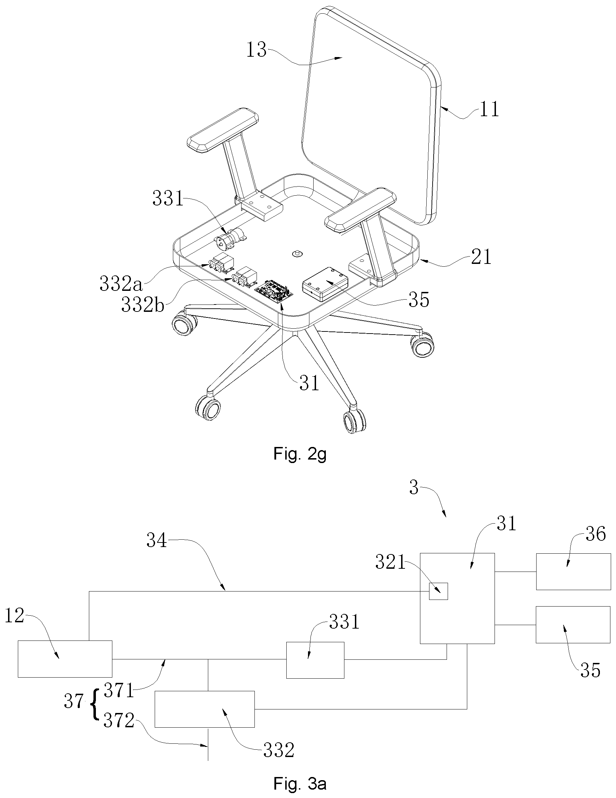

As shown in Fig. 2f and Fig. 2g, the present disclosure further provides a chair, including a sedentariness prevention device as described above. The chair of the present disclosure can adjust the user's sitting posture and massage the buttocks and/or back without affecting the normal work of the user, to avoid sedentary behavior of the user and reduce the pressure on lumbar vertebra.

Further, in order to improve the integration degree of the above-mentioned chair, the controller 31, the pressure sensor 32 and the inflation and deflation device 33 of the above-mentioned control system 3 are disposed in the seat 2.

Therefore, the sedentariness prevention device and the chair of the present disclosure can adjust the user's sitting posture and massage the buttocks and/or back without affecting the normal work of the user, to avoid sedentary behavior of the user and reduce the pressure on the lumbar vertebra.

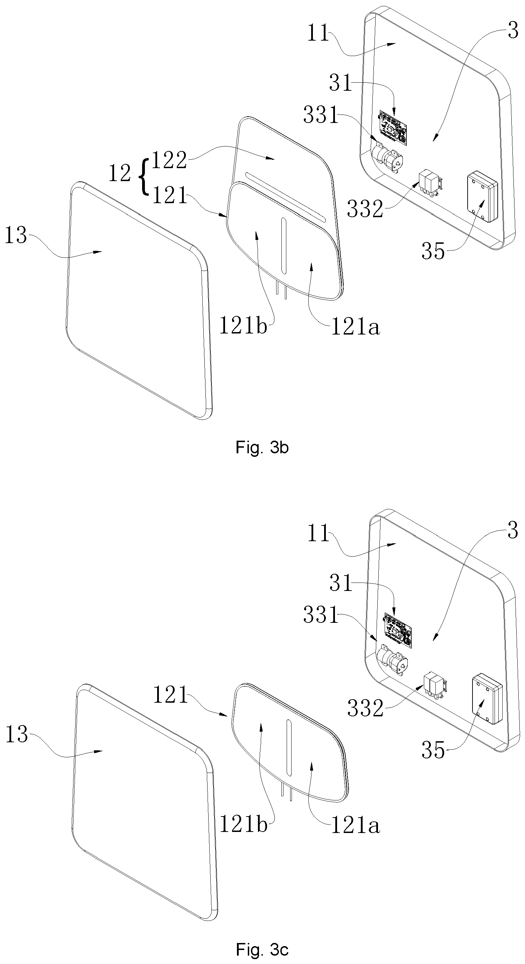

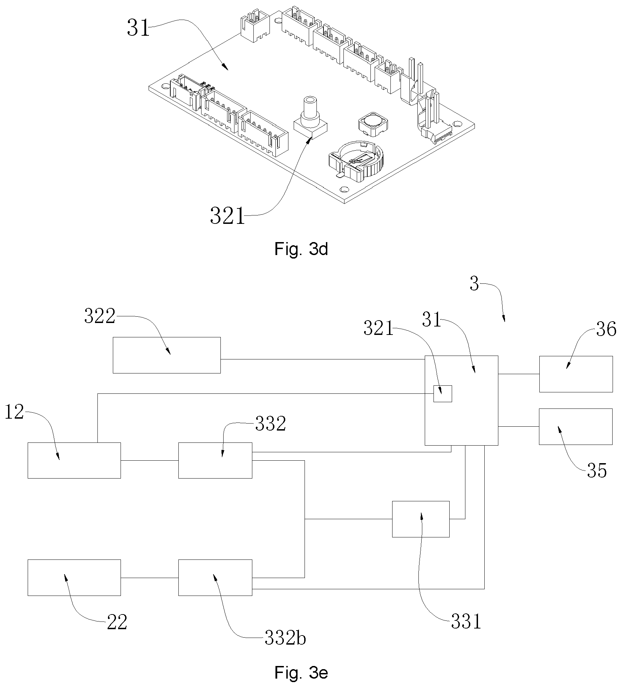

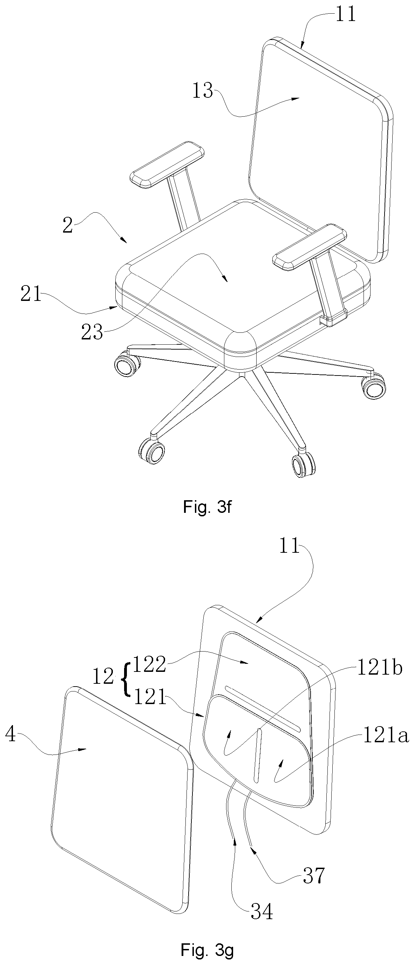

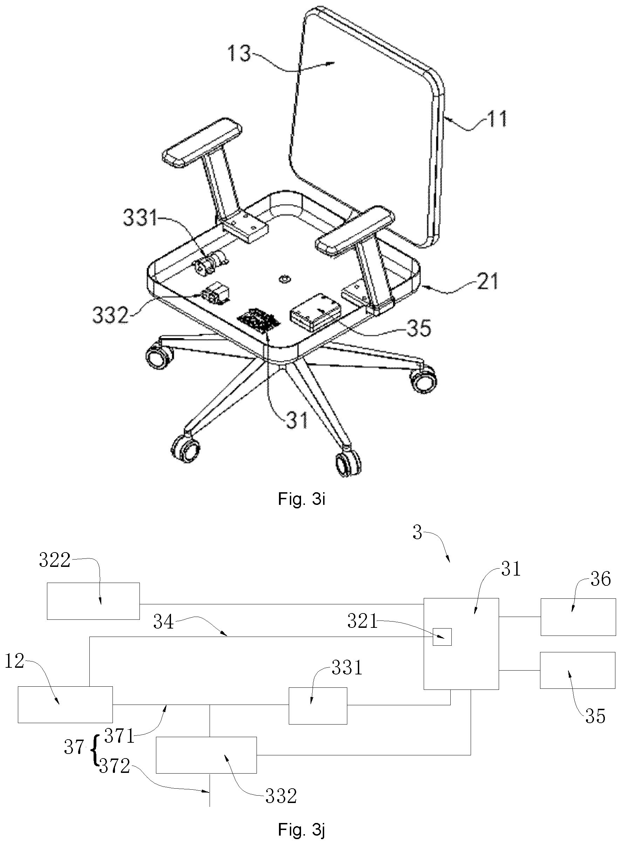

As shown in Fig. 3a, Fig. 3b, Fig. 3c and Fig. 3d, the present disclosure also provides a back-following support device, including:
A backrest plate 11;
A flexible back and waist support, including a cushion airbag 12 disposed over the backrest plate 11; and
A control system 3, including a controller 31, an air supply device 331 for inflating the cushion airbag 12, a pressure-regulating valve 332 for controlling the amount of air in the cushion airbag 12, and an air pressure sensor 321 for detecting air pressure inside the cushion airbag 12; the air supply device 331, the pressure-regulating valve 332, and the air pressure sensor 321 are all connected to the controller 31.

In the present disclosure, when the user's waist and/or back leans on the cushion airbag 12, air pressure inside the cushion airbag 12 is changed, and the air pressure sensor 321 transmits air pressure data to the controller 31, and the controller 31 processes the air pressure data to determine whether the back-following support device is being used. If the controller 31 determines that the back-following support device is being used, the controller 31 controls the air supply device 331 (for example, an air pump) and the pressure-regulating valve 332 (for example, a normally closed solenoid valve or a two-way solenoid valve, which has functions of inflating, deflating, and holding pressure) to inflate the cushion airbag 12 until the cushion airbag 12 can fully support the waist and/or back of the user. When air pressure inside the cushion airbag 12 reaches a preset air pressure value, the controller 31 controls the air supply device 331 to stop inflating the cushion airbag 12, and controls the pressure-regulating valve 332 to keep the cushion airbag 12 at the preset air pressure value. When the user changes his or her sitting posture and the cushion airbag 12 cannot fully support the user's waist and/or back, air pressure inside the cushion airbag 12 decreases, and the controller 31 controls the air supply device 331 and the pressure-regulating valve 332 to inflate the cushion airbag 12 until the cushion airbag 12 fully supports the user's waist and/or back at which time air pressure inside the cushion airbag 12 reaches the preset air pressure value again. When the user changes his or her sitting posture and a support force of the cushion airbag 12 on waist and/or back of the user is too large, air pressure inside the cushion airbag 12 increases, and the controller 31 controls the pressure-regulating valve 332 to allow air in the cushion airbag 12 to be exhausted to atmosphere until the supporting force of the cushion airbag 12 on the user's waist and/or back is moderate again at which time air pressure inside the cushion airbag 12 reaches the preset pressure value again.

Therefore, under the action of the control system 3, the cushion airbag 12 is inflated and deflated as the user's sitting posture changes, thereby changing the volume of the cushion airbag 12 to make the user comfortable, making the back-following support device fit and effectively support the user's waist and/or back, changing the support force of the cushion airbag 12 on waist and/or back, greatly reducing the damage to the lumbar vertebra caused by sedentariness, and realizing the function of back-following support.

As shown in Fig. 3b and Fig. 3c, in order to protect the cushion airbag 12 and allow the user to lean more comfortably, the back-following support device further includes a first soft cushion cover 13; the first soft cushion cover 13 covers a side of the cushion airbag 12 facing away from the backrest plate 11.

As shown in Fig. 3a, the above-mentioned flexible back and waist support further includes an air supply and exhaust passage 37 and a pressure-measuring air passage 34 which are communicate with the cushion airbag 12. The air supply device 331 is connected to the air supply and exhaust passage 37, the pressure-regulating valve 332 is disposed over the air supply and exhaust passage 37, and the air pressure sensor 321 is connected to the pressure-measuring air passage 34.

Further, the above-mentioned air supply and exhaust passage 37 includes an inflation pipeline 371 and an exhaust pipeline 372, the inflation pipeline 371 is communicated with the exhaust pipeline 372; two ends of the inflation pipeline 371 are respectively connected to the air supply device 331 and the cushion airbag 12, and the pressure-regulating valve assembly 332 is disposed over the exhaust pipeline 372.

As shown in Fig. 3d, in order to facilitate adjustment of the preset air pressure value inside the cushion airbag 12, the control system 3 further includes a hand controller 36, and the hand controller 36 is connected to the controller 31.

In order to supply power to the controller 31, the control system 3 further includes a power supply 35, and the power supply 35 (e.g., a battery) is connected to the controller 31.

The cushioning airbag 12 may include one airbag, or multiple airbags. Further, in the first embodiment of the back-following support device, as shown in Fig. 3b, the cushion airbag 12 includes a waist airbag 121 and a back airbag 122 communicated with each other. When the user's waist and/or back rests on the back airbag 122, the back airbag 122 is compressed, and since the waist airbag 121 and the back airbag 122 are communicated with each other, air inside the back airbag 122 flows into the waist airbag 121 to balance air pressure inside the cushion airbag 12; as air inside the back airbag 122 flows into the waist airbag 121, the volume of the waist airbag 121 becomes larger and the volume of the back airbag 122 becomes smaller, thereby effectively supporting the waist and/or back of the user.

In order to allow the user to lean more comfortably, the waist airbag 121 includes two left air chambers 121a that overlap each other, and two right air chambers 121b that overlap each other, and the back airbag 122 has one air chamber.

As shown in Fig. 3e-3j, the present disclosure further provides a chair, including a seat 2 and the above-mentioned back-following support device. The chair of the present disclosure allows the user to lean more comfortably, and effectively protects lumbar vertebrae of the user.

As shown in Fig. 3j, the seat 2 includes a seat plate 21 and a sitting pressure sensor 322 disposed on the seat plate 21; the sitting pressure sensor 322 is connected to the controller 31. For example, the sitting pressure sensor 322 may be one of a thin film pressure sensor, a capacitive sensor, a strain gauge, and a mechanical switch.

When an user sits on the above-mentioned chair, the sitting pressure sensor 322 disposed over the seat plate 21 measures pressure data exerted on the seat plate 21 and transmits the pressure data to the controller 31; according to the pressure data, the controller 31 controls the air supply device 331 and the pressure-regulating valve 332 to inflate the cushion airbag 12 until the cushion airbag 12 can fully support the user's waist and/or back. When air pressure inside the cushion airbag 12 reaches a preset air pressure value, the controller 31 controls the air supply device 331 to stop inflating the cushion airbag 12, and controls the pressure-regulating valve 332 to keep the cushion airbag 12 at the preset air pressure value. When the user changes his or her sitting posture and the cushion airbag 12 cannot fully support the user's waist and/or back as a result, air pressure inside the cushion airbag 12 decreases, and the controller 31 controls the air supply device 331 and the pressure-regulating valve 332 to inflate the cushion airbag 12 until the cushion airbag 12 fully supports the user's waist and/or back again at which time air pressure inside the cushion airbag 12 reaches the preset air pressure value again. When the user changes his or her sitting posture and the support force of the cushion airbag 12 on waist and/or back of the user is too large, air pressure inside the cushion airbag 12 increases, and the controller 31 controls the pressure-regulating valve 332 to allow air in the cushion airbag 12 to be exhausted to atmosphere until the support force of the cushion airbag 12 on the user's waist and/or back is moderate againat which time air pressure inside the cushion airbag 12 reaches the preset pressure value again.

As shown in Fig. 3e, in an embodiment, the seat 2 further includes a seat airbag 22 that is conFigured to be inflated by the air supply device 331, and a second pressure-regulating valve 332b (which may be a pressure-controlled bi-directional air valve) that controls the amount of air inside the seat airbag 22; the second pressure-regulating valve 332b is connected to the controller 31.

When a user sits on the above chair, the controller 31 controls the air supply device 331 and the second pressure-regulating valve 332b to inflate the seat airbag 22 according to pressure data detected by the sitting pressure sensor 322. When air pressure inside the seat airbag 22 reaches a second preset air pressure value, the second pressure-regulating valve 332b is controlled to keep the cushion airbag 12 at the second preset air pressure value, thereby enabling the seat 2 more comfortable. For example, the second pressure-regulating valve 332b is a two-way solenoid valve, which has the functions of inflating, deflating, and holding pressure.

The chair of the present disclosure can make the seat 2 and the back-following support device more comfortable, to effectively support the user's waist and/or back and meet requirements of different people.

In addition, in order to protect the seat airbag 22 and allow the use to sit more comfortably, the seat 2 further includes a second soft cushion cover 23; the second soft cushion layer 23 covers a side of the seat airbag 22 facing away from the seat plate 21.

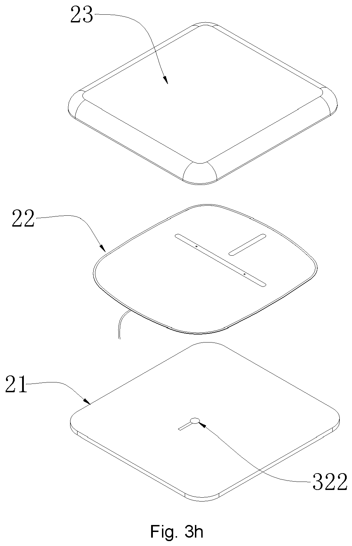

As shown in Fig. 3h, the seat airbag 22 includes a front air chamber, a rear right air chamber, and a rear left air chamber.

Therefore, the back-following support device of the present disclosure can fit and effectively support the user's waist and/or back, change the support force of the cushion airbag 12 on waist and/or back, greatly reduce the damage to the lumbar vertebra caused by sedentariness, and realize the function of back-following support. In addition, the seat and the back-following support device can be adjusted to make the chair more comfortably, thereby effectively supporting the user's waist and/or back.

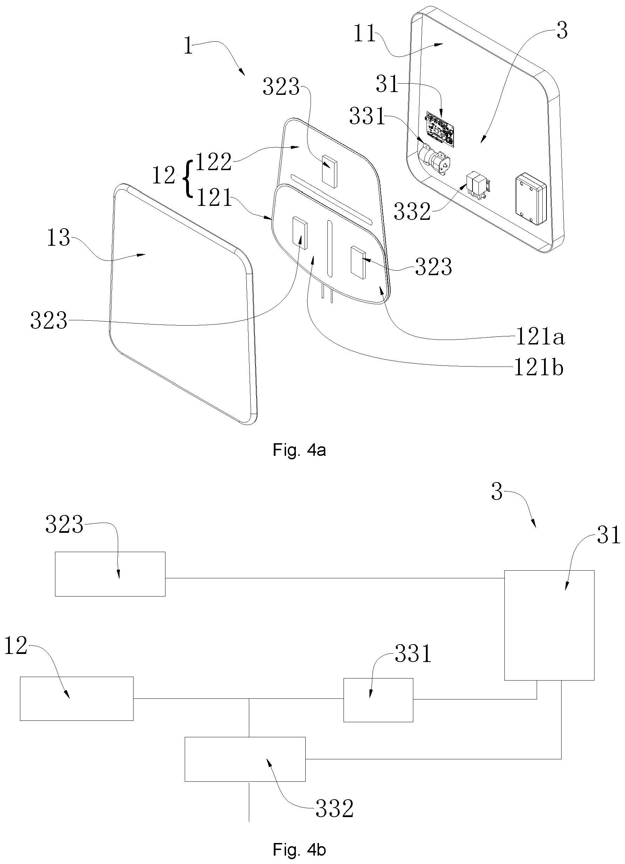

As shown in Fig. 4a and Fig. 4b, the present disclosure provides an external-pressure-sensing back-following support device, including:

A backrest 1, including a backrest plate 11 and a flexible back and waist support; the flexible back and waist support includes a cushion airbag 12 disposed over the backrest plate 11; and

A control system 3, including a controller 31, an air supply device 331 for inflating the cushion airbag 12, a pressure-regulating valve 332 for controlling the amount of air in the cushion airbag 12, and a pressure sensor 323 for detecting a pressure of a waist and/or back of a human body on the cushion airbag 12; the pressure sensor 323 is disposed over a first outer surface of the cushion airbag 12, and the first outer surface of the cushion airbag 12 faces a waist and/or back of a human body, or the pressure sensor 323 is disposed over a second outer surface of the cushion airbag 12, and the second outer surface of the cushion airbag 12 faces away from a waist and/or back of the user; the air supply device 331, the pressure-regulating valve 332, and the pressure sensor 323 are all connected to the controller 31.

In the present disclosure, the pressure sensor 323 is disposed over a first outer surface of the cushion airbag 12, and the first outer surface of the cushion airbag 12 faces a waist and/or back of the user or the pressure sensor 323 is disposed over a second outer surface of the cushion airbag 12, and the second outer surface of the cushion airbag 12 faces away from a waist and/or back of the user. The pressure measured by the pressure sensor 323 changes when a waist and/or back of the user leans against the cushion airbag 12; the pressure data measured by the pressure sensor 323 is transmitted to the controller 31, and the controller 31 processes the pressure data to determine whether the external-pressure-sensing back-following support device is used. If the external-pressure-sensing back-following support device is used, the controller 31 controls the air supply device 331 (for example, an air pump) and the pressure-regulating valve 332 (for example, a normally closed solenoid valve and a two-way solenoid valve, which has functions of inflating, deflating and holding pressure) to inflate the cushion airbag 12, until the cushion airbag 12 can fully support a waist and/or back of the user. When the pressure measured by the pressure sensor 323 reaches the preset air pressure value, the controller 31 controls the air supply device 331 to stop inflating the cushion airbag 12, and controls the pressure-regulating valve 332 to keep the cushion airbag 12 at the preset air pressure value. When the user changes his or her sitting posture and the cushion airbag 12 cannot fully support the user's waist and/or back, air pressure detected by the pressure sensor 323 decreases, and the controller 31 controls the air supply device 331 and the pressure-regulating valve 332 to inflate the cushion airbag 12 until the cushion airbag 12 fully supports the user's waist and/or back at which time air pressure measured by the pressure sensor 323 reaches the preset air pressure value again. When the user changes his or her sitting posture and the support force of the cushion airbag 12 on waist and/or back of the user is too large, air pressure measured by the pressure sensor 323 increases, and the controller 31 controls the pressure-regulating valve 332 to allow air in the cushion airbag 12 to be exhausted to atmosphere until the support force of the cushion airbag 12 on the user's waist and/or back is moderate againat which time the pressure measured by the pressure sensor 323 reaches the preset pressure value again.

The traditional external-pressure-sensing back-following support device requires a pressure sensor to be arranged inside the cushion airbag 12 or in a flow channel communicated with the cushion airbag, however, in the external-pressure-sensing back-following support device of the present disclosure, the pressure sensor 323 is disposed over the first outer surface of the cushion airbag 12 and the first outer surface of the cushion airbag 12 faces a waist and/or back of the user, to facilitate the maintenance and replacement of the pressure sensor 323; meanwhile, there is no need to lay an additional pressure-measuring passage, thus improving the reliability of the pressure data obtained by the pressure sensor 323.

Therefore, under the action of the control system 3, the cushion airbag 12 is inflated and deflated as the user's sitting posture changes, thereby changing the volume of the cushion airbag 12 tomake the user more comfortable, making the flexible back and waist support fit and effectively support the user's waist and/or back, changing a support force of the cushion airbag 12 on waist and/or back, greatly reducing the damage to the lumbar vertebra caused by sedentariness, realizing the function of manual back-following support, facilitating the maintenance and replacement of the pressure sensor 323, and improving the reliability of the pressure data obtained by the pressure sensor 323.

In order to cover the pressure sensor 323 to improve the overall aesthetics of the external-pressure-sensing back-following support device, the external-pressure-sensing back-following support device further includes a first soft cushion cover 13; the first soft cushion cover 13 covers a side of the cushion airbag 12 facing away from the backrest plate 11, and the pressure sensor 323 is sandwiched between the cushion airbag 12 and the first soft cushion cover 13. Further, the first soft cushion cover 13 is made of elastic cloth, which allows the first soft cushion cover 13 to better wrap and fit the external-pressure-sensing back-following support device.

In order to improve the reliability of the pressure data obtained by the pressure sensor 323, the cushion airbag 12 includes a waist airbag 121 and a back airbag 122 which are communicated with each other; the number of the pressure sensors 323 is more than one, and the pressure sensors 323 includes a first group of pressure sensors and a second group of pressure sensors; the first group of pressure sensors 323 is disposed over an outer side of the waist airbag 121 facing a waist of the user, and the second group of pressure sensors 323 is disposed over an outer side of the back airbag 122 facing the back of the user. In an embodiment, to allow the user to lean more comfortably, the waist airbag 121 includes two left air chambers 121a that overlap each other and two right air chambers 121b that overlap each other, an outer surface of the two left air chambers 121a and an outer surface of the two right air chambers 121b are provided with one pressure sensor 323 respectively.

In addition, the external-pressure-sensing back-following support device can also be applied to chairs.

The external-pressure-sensing back-following support device and the chair of the present disclosure can make the flexible back and waist support fit and effectively support the user's waist and/or back, change the support force of the cushion airbag 12 on user's waist and/or back, greatly reduce the damage to the lumbar vertebra caused by sedentariness, realize the function of back-following support, facilitate the maintenance and replacement of the pressure sensor 323, and improve the reliability of the pressure data obtained by the pressure sensor 323.

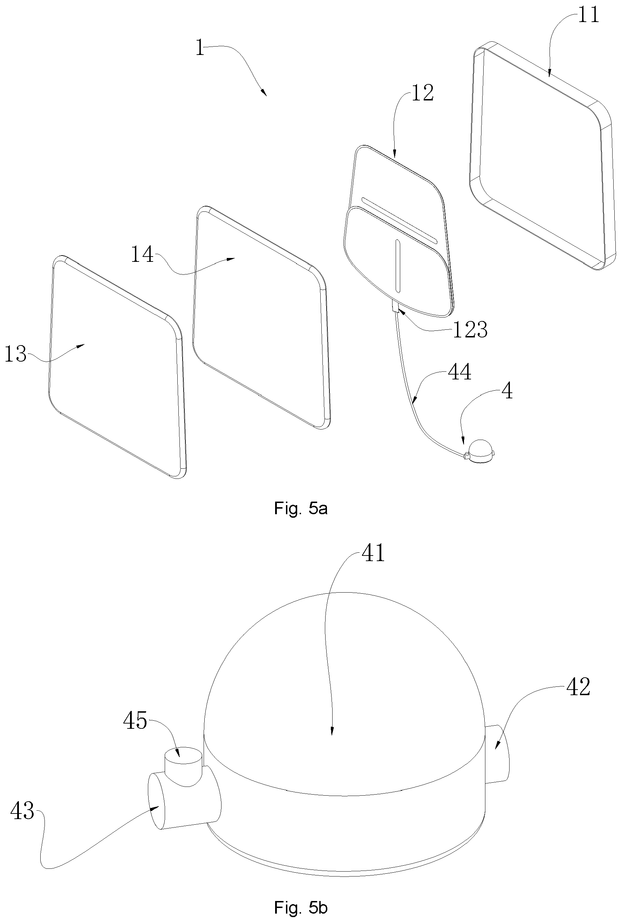

As shown in Fig. 5a and Fig. 5b, the present disclosure provides a manual back-following support device, including:
A backrest 1, including a backrest plate 11 and a flexible back and waist support; the flexible back and waist support includes a cushion airbag 12 disposed over the backrest plate 11, and the cushion airbag 12 includes an air nozzle 123 that allows air to enter and exit the cushion airbag 12; and
A manual inflation and deflation device 4, including an expandable air storage cavity 41; the expandable air storage cavity 41 is provided with a suction check valve 42 that allows air to flow into the expandable air storage cavity 41 and an exhalation check valve 43 that allows air to flow out from the expandable air storage cavity 41; the exhalation check valve 43 is connected to the air nozzle 123 through a ventilation pipeline 44, and the exhalation check valve 43 is provided with an exhaust check valve 45 that allows air in the ventilation pipeline 44 to be exhausted to atmosphere. In an embodiment, the suction check valve 42 and the exhalation check valve 43 are a one-way valve.

In the present disclosure, in the manual inflation and deflation device 4, the exhaust check valve 45 is a normally closed valve, and the exhaust check valve 45 is opened by pressing the exhaust check valve 45. An inner cavity of the expandable air storage cavity 41 can be expanded or contracted. With the suction check valve 42 closed, the exhaust check valve 45 closed, and the exhalation check valve 43 opened, when the user presses the expandable air storage cavity 41, the inner cavity of the expandable air storage cavity 41 is gradually reduced and air in the expandable air storage cavity 41 is transmitted to the cushion airbag 12 through the above-mentioned ventilation pipeline 44, so that the cushion airbag 12 is inflated to provide comfort degree for the user and support for the user's waist or back. With the suction check valve 42 opened, the exhaust check valve 45 closed, and the exhalation check valve 43 closed, when the user releases the expandable air storage cavity 41, air from atmosphere flows into the inner cavity of the expandable air storage cavity 41 and the expandable air storage cavity 41 expands to its initial state under the action of an elastic recovery force. When it is necessary to reduce the size of the cushion airbag 12 along a direction perpendicular to the backrest plate 11 due to a change in the user's sitting posture, the exhaust check valve 45 is opened and air in the cushion airbag 12 is discharged to the atmosphere through the ventilation pipeline 44 and the exhaust check valve 45 in turn. When it is necessary to increase the size of the cushion airbag 12 along a direction perpendicular to the backrest plate 11 due to a change in the user's sitting posture, the expandable air storage cavity 41 is pressed to inflate the cushion airbag 12, so that the volume of the cushioned airbag 12 meets the support requirements for the user. In addition, the expandable air storage cavity 41 is provided with the suction check valve 42 and the exhalation check valve 43, and the exhalation check valve 43 is provided with the exhaust check valve 45, so that the overall size of the manual inflation and deflation device 4 is small and it is convenient for the user to control the inflation and deflation of the cushion airbag 12 with one hand.

Therefore, the manual back-following support device of the present disclosure enables the user to manually inflate and deflate the cushion airbag 12 based on the change of the user's sitting posture under the condition of no power, thereby changing the volume of the cushioned airbag 12 to make the user more comfortable and making the flexible back and waist support fit and effectively support the user's waist and/or back. The above inflating and deflating method can change the support force of the cushion airbag 12 on waist and/or back, greatly reduce the damage to the lumbar vertebra caused by sedentariness, realizes the function of manual back-following support, and facilitates the user to control the cushion airbag 12 with one hand, so as to realize the function of manual inflation and deflation.

In order to improve the user's comfort, the above-mentioned manual back-following support device further includes a first soft cushion cover 13, the first soft cushion cover 13 covers a side of the cushion airbag 12 facing away from the backrest plate 11, and the pressure sensor 323 is sandwiched between the cushion airbag 12 and the first soft cushion cover 13.

In order to allow the first soft cushion cover 13 to better wrap, the first soft cushion cover 13 is made of elastic cloth.

The leaning buffer layer 14 is made of sponge.

The manual back-following support device can also be applied to chairs.

The present disclosure enables the user to manually inflate and deflate the cushion airbag 12 by changing his or her sitting posture without using electrical power, realizes the function of manual back-following support, and facilitates the user to control the cushion airbag 12 with one hand.

The above-mentioned embodiments are just used for exemplarily describing the principle and effects of the present disclosure instead of limiting the present disclosure. Changes and variations made by those skilled in the art without departing from the spirit and scope of the present disclosure fall within the scope of the present disclosure.

## Claims

1. A back-following support device, comprising:
a backrest plate (11);
a flexible back and waist support, comprising a cushion airbag (12) disposed over the backrest plate (11); and
a control system (3), comprising a controller (31), an air supply device (331) for inflating the cushion airbag (12), a pressure-regulating valve (332) for controlling the amount of air in the cushion airbag (12), and an air pressure sensor (321) for detecting air pressure inside the cushion airbag (12); wherein the air supply device (331), the pressure-regulating valve (332), and the air pressure sensor (321) are all connected to the controller (31).

2. The back-following support device according to claim 1, wherein the back-following support device further comprises a first soft cushion cover (13); wherein the first soft cushion cover (13) covers a side of the cushion airbag (12) facing away from the backrest plate (11).

3. The back-following support device according to claim 1, wherein the flexible back and waist support further comprises an air supply and exhaust passage (37) and a pressure-measuring air passage (34) which are communicated with the cushion airbag (12); wherein the air supply device (331) is connected to the air supply and exhaust passage (37), the pressure-regulating valve (332) is disposed over the air supply and exhaust passage (37), and the air pressure sensor (321) is connected to the pressure-measuring air passage (34).

4. The back-following support device according to claim 3, wherein the air supply and exhaust passage (37) comprises an inflation pipeline (371) and an exhaust pipeline (372), and the inflation pipeline (371) is communicated with the exhaust pipeline (372); wherein two ends of the inflation pipeline (371) are respectively connected to the air supply device (331) and the cushion airbag (12), and the pressure-regulating valve (332) is disposed over the exhaust pipeline (372).

5. The back-following support device according to claim 1, wherein the control system (3) further comprises a hand controller (36) connected to the controller (31).

6. The back-following support device according to claim 1, wherein the cushion airbag (12) comprises a waist airbag (121) and a back airbag (122) communicated with each other.

7. The back-following support device according to claim 6, wherein the waist airbag (121) comprises two left air chambers (121a) that overlap each other, and two right air chambers (121b) that overlap each other, and the back airbag (122) has one air chamber.

8. A chair, comprising a seat (2) and a back-following support device according to any one of claims 1 to 7.

9. The chair according to claim 8, wherein the seat (2) comprises a seat plate (21), and a sitting pressure sensor (322) disposed over the seat plate (21); wherein the sitting pressure sensor (322) ) is connected to the controller (31).

10. The chair according to claim 9, wherein the seat (2) further comprises a seat airbag (22) that is conFigured to be inflated by the air supply device (331), and a second pressure-regulating valve (332b) that controls the amount of air inside the seat airbag (22); wherein the second pressure-regulating valve (332b) is connected to the controller (31).

11. A control method for preventing sedentariness, comprising:
S1, determining whether a user is sitting on a chair as claimed in claim 8, if yes, a sitting duration for which the user sits on the chair is recorded, if not, the sitting duration is reset to zero;
S2, determining whether the sitting duration reaches a preset warning duration, if yes, step S2 is followed by step S3, if not, the control method returns to step S1; and
S3, repeatedly inflating and deflating a body position intervention airbag disposed at the user's buttocks and/or back, so that the body position intervention airbag repeatedly pushes the user's buttocks and/or back.

12. The control method for preventing sedentariness according to claim 11, wherein the step S3 comprises the following steps:
S31, inflating the body position intervention airbag, and recording an inflation duration for which the body position intervention airbag is being inflated;
S32, determining in real time whether the inflation duration reaches a first preset duration, if yes, step S32 is followed by step S33, if not, the control method returns to step S31;
S33, deflating the body position intervention airbag, and recording a deflation duration for which the body position intervention airbag is being deflated;
S34, determining in real time whether the deflation duration reaches a second preset duration, if yes, step S34 is followed by step S35, if not, the control method returns to step S33;
S35, recording a number of inflation-deflation cycles the body position intervention airbag undergoes; and
S36, determining whether the number of inflation-deflation cycles reaches a preset number, if yes, the inflation and deflation of the body position intervention airbag is stopped, if not, the control method returns to step S31.

13. A sedentariness prevention device for realizing a control method for preventing sedentariness as claimed in claim 11 or claim 12, comprising:
a backrest (1), comprising a backrest plate (11);
a seat (2), comprising a seat plate (21);
a body position intervention airbag, disposed over the seat plate (21) and/or the backrest plate (11); and
a control system (3), comprising a controller (31), an air pressure sensor (321), and an inflation and deflation device (33); wherein the controller (31) comprises a sitting monitoring module (311), a sitting timing module (312), a sedentariness determination module (313), and a sitting-posture adjustment module (314) which are connected in sequence; wherein the air pressure sensor (321) is used to measure air pressure inside the body position intervention airbag in real time and is communicatively connected to the sitting monitoring module (311); wherein the inflation and deflation device (33) is communicated with the body position intervention airbag and is communicatively connected to the sitting-posture adjustment module (314).

14. The sedentariness prevention device according to claim 13, wherein the body position intervention airbag comprises a seat airbag (22) disposed over the seat plate (21) and/or a cushion airbag (12) disposed over the backrest plate (11).

15. The sedentariness prevention device according to claim 13, wherein the control system (3) further comprises a pressure-measuring air passage (34) which is communicated with the body position intervention airbag, and the air pressure sensor (321) is disposed over the pressure-measuring air passage (34).

16. The sedentariness prevention device according to claim 13, wherein the inflation and deflation device (33) comprises an air supply device (331) for inflating the body position intervention airbag, and a pressure-regulating valve (332) for controlling the amount of air inside the body position intervention airbag; wherein the air supply device (331) and the pressure-regulating valve (332) are all connected to the sitting-posture adjustment module (314).

17. The sedentariness prevention device according to claim 13, wherein the control system (3) further comprises a power supply (35) connected to the controller (31).

18. The sedentariness prevention device according to claim 13, wherein the control system (3) further comprises a hand controller (36) connected to the controller (31).

19. A sedentariness prevention device for realizing a control method for preventing sedentariness as claimed in claim 11 or claim 12, comprising:
a backrest (1), comprising a backrest plate (11), and a cushion airbag (12) disposed over the backrest plate (11);
a seat (2), comprising a seat plate (21), and a seat airbag (22) disposed over the seat plate (21); and
a control system (3), comprising a controller (31), a pressure sensor (32), and an inflation and deflation device (33); wherein the controller (31) comprises a real-time acquisition module (315), a pressure judgment module (316), and a sitting-posture adjustment module (314) which are connected in sequence; wherein the pressure sensor (32) is disposed over the seat (2) and/or the backrest (1) and is communicatively connected to the real-time acquisition module (315), the inflation and deflation device (33) is communicated with the cushion airbag (12) and the seat airbag (22) respectively, and is communicatively connected to the sitting-posture adjustment module (314).

20. The sedentariness prevention device according to claim 19, wherein the backrest (1) further comprises a first soft cushion cover (13); wherein the first soft cushion cover (13) covers a side of the cushion airbag (12) facing away from the backrest plate (11).

21. The sedentariness prevention device according to claim 19, wherein the seat (2) further comprises a second soft cushion cover (23); wherein the second soft cushion cover (23) covers a side of the seat airbag (22) facing away from the seat plate (21).

22. The sedentariness prevention device according to claim 19, wherein the seat (2) further comprises a pressure-measuring air passage (34) which is communicated with the seat airbag (22), the pressure sensor (32) comprises an air pressure sensor (321), and the air pressure sensor (321) is disposed over the pressure-measuring air passage (34).

23. The sedentariness prevention device according to claim 19, wherein the pressure sensor (32) comprises a sitting pressure sensor (322), and the sitting pressure sensor (322) is disposed over the seat plate (21).

24. The sedentariness prevention device according to claim 19, wherein the inflation and deflation device (33) comprises an air supply device (331) for inflating the cushion airbag (12) and the seat airbag (22) respectively, a first pressure-regulating valve (332a) for controlling the amount of air inside the cushion airbag (12), and a second pressure-regulating valve (332b) for controlling the amount of air inside the seat airbag (22); wherein the air supply device (331), the first pressure-regulating valve (332a), and the second pressure-regulating valve (332b) are all connected to the sitting-posture adjustment module (314).

25. The sedentariness prevention device according to claim 19, wherein the control system (3) further comprises a power supply (35) connected to the controller (31).

26. The sedentariness prevention device according to claim 19, wherein the cushion airbag (12) comprises a waist airbag (121) and a back airbag (122) communicated with each other.

27. The sedentariness prevention device according to claim 19, wherein the seat airbag (22) comprises a front side airbag (221) and a rear side airbag (222).

28. A chair, comprising a sedentariness prevention device according to any one of claims 19 to 27.

29. An external-pressure-sensing back-following support device, comprising:
a backrest (1), comprising a backrest plate (11) and a flexible back and waist support; wherein the flexible back and waist support comprises a cushion airbag (12) disposed over the backrest plate (11); and
a control system (3), comprising a controller (31), an air supply device (331) for inflating the cushion airbag (12), a pressure-regulating valve ( 332) for controlling the amount of air in the cushion airbag (12), and a pressure sensor (323) for detecting a pressure of a waist and/or back of a human body on the cushion airbag (12); wherein the pressure sensor (323) is disposed over a first outer surface of the cushion airbag (12), and the first outer surface of the cushion airbag (12) faces a waist and/or back of a human body, or the pressure sensor (323) is disposed over a second outer surface of the cushion airbag (12), and the second outer surface of the cushion airbag (12) faces away from a waist and/or back of a human body; wherein the air supply device (331), the pressure-regulating valve (332), and the pressure sensor (323) are all connected to the controller (31).

30. The external-pressure-sensing back-following support device according to claim 29, further comprising a first soft cushion cover (13); wherein the first soft cushion cover (13) covers a side of the cushion airbag (12) facing away from the backrest plate (11), and the pressure sensor (323) is sandwiched between the cushion airbag (12) and the first soft cushion cover (13).

31. The external-pressure-sensing back-following support device according to claim 30, wherein the first soft cushion cover (13) is made of elastic cloth.

32. The external-pressure-sensing back-following support device according to claim 29, wherein the cushion airbag (12) includes a waist airbag (121) and a back airbag (122) which are communicated with each other; wherein the number of the pressure sensors (323) is more than one, and the pressure sensors (323) include a first group of pressure sensors and a second group of pressure sensors; wherein the first group of pressure sensors (323) is disposed over an outer side of the waist airbag (121) facing a waist of a human body, and the second group of pressure sensors (323) is disposed over an outer side of the back airbag (122) facing a back of a human body.

33. A manual back-following support device, comprising:
a backrest (1), comprising a backrest plate (11) and a flexible back and waist support, wherein the flexible back and waist support comprises a cushion airbag (12) disposed over the backrest plate (11), and the cushion airbag (12) comprises an air nozzle (123) that allows air to enter and exit the cushion airbag (12); and
a manual inflation and deflation device (4), comprising an expandable air storage cavity (41); wherein the expandable air storage cavity (41) is provided with a suction check valve (42) that allows air to flow into the expandable air storage cavity (41) and an exhalation check valve (43) that allows air to flow out from the expandable air storage cavity (41); wherein the exhalation check valve (43) is connected to the air nozzle (123) through a ventilation pipeline (44), and the exhalation check valve (43) is provided with an exhaust check valve (45) that allows air in the ventilation pipeline (44) to be exhausted to atmosphere.

34. The manual back-following support device according to claim 33, wherein the manual back-following support device further comprises a first soft cushion cover (13); wherein the first soft cushion cover (13) covers a side of the cushion airbag (12) facing away from the backrest plate (11), wherein a leaning buffer layer (14) is sandwiched between the first soft cushion cover (13) and the cushioning airbag (12).

35. The manual back-following support device according to claim 34, wherein the first soft cushion cover (13) is made of elastic cloth.

36. The manual back-following support device according to claim 34, wherein the leaning buffer layer (14) is made of sponge.
